# EUROPÄISCHE PATENTSCHRIFT

(11) **EP 1 426 784 B1**
(45) Veröffentlichungstag und Bekanntmachung des Hinweises auf die Patenterteilung: **06.01.2021**
(21) Anmeldenummer: 03023368.8
(22) Anmeldetag: 16.10.2003
(51) Int. Cl.: G01S 11/16

(54) **Vorrichtung und Verfahren zur Positionsbestimmung**
Apparatus and method for position determination
Dispositif et procédé de localisation

(30) Priorität: 06.12.2002 CH 20762002
(43) Veröffentlichungstag der Anmeldung: 09.06.2004
(73) Patentinhaber: RUAG Simulation & Training AG, 3014 Bern (CH)
(72) Erfinder: Fardin, Rahim, 8953 Dietikon (CH); Ochsner, Fabian, 5415 Nussbaumen (CH)
(74) Vertreter: AMMANN PATENTANWÄLTE AG

(56) Entgegenhaltungen:
- EP-A- 0 233 472
- EP-A- 0 836 069
- EP-A- 1 128 153
- WO-A-95/14241
- FR-A- 2 631 454
- GB-A- 2 170 907
- US-A- 3 696 384
- US-A- 5 831 937
- US-A- 6 141 293
- US-B1- 6 317 386

## Beschreibung

Die vorliegende Erfindung betrifft eine Vorrichtung und Verfahren zur Positionsbestimmung eines sich bewegenden Objekts in einem überwachbaren Bereich mit einem stationären Überwachungssystem und einem am sich bewegenden Objekt befestigten Transponder.

### Hintergrund der Erfindung

Es gibt verschiedene Systeme, die es ermöglichen die Position eines Gegenstandes oder einer Person zu überwachen. Weitere Systeme befinden sich in der Entwicklung.

Man unterscheidet autarke Systeme, die so aufgebaut sind, dass sie einen Gegenstand oder eine Person aus eigenen Stücken erfassen und deren Position ermitteln können, ohne dazu mit einem Kommunikationsmittel, das sich am Gegenstand oder an der Person befindet, in Wechselwirkung treten zu müssen und solche Systeme, die semi-autark sind. Ein semi-autarkes System ist darauf angewiesen, dass der Gegenstand oder die Person ein Kommunikationsmittel aufweist.

GPS-basierte Systeme werden zum Beispiel im offenen Gelände zur Positionsermittlung eingesetzt. Derartige Systeme sind jedoch für den Einsatz in Gebäuden nicht geeignet.

Die Simulation von verschiedenen Einsatzszenarien ist für die Ausbildung und das Training von Spezialkräften besonders wichtig. Es werden Systeme angeboten, die zum Beispiel im militärischen aber auch in anderen Bereichen zur Anwendung kommen. Ein Beispiel ist das sogenannte SIMLAS® System der Firma Oerlikon Contraves AG. SIMLAS ist eine Marke der genannten Firma. Das SIMLAS® System zeichnet sich dadurch aus, dass eine Person mit einem Gurtsystem ausgerüstet wird, das einen Körpergurt und einen Helmgurt umfasst. An diesem Gurtsystem sind Kommunikationsmittel befestigt, die Information aussenden und empfangen können.

Aus dem Europäischen Patent mit der Nummer EP 0836069-B1 ist ein Gurtsystem für Gefechtszwecke mit einer Vielzahl von Elementen, wie Lichtdetektoren, einem Lasersender und einer Kontrolleinheit bekannt. Dieses bekannte System umfasst mehrere mit elektrischen Bauteilen versehene Gurte, die über Ultraschall oder Funk Informationssignale mit einer Zentral-Einheit austauschen. Ein Gurtsystem, das auf dem in dem Europäischen Patent beschriebenen aufbaut, ist zum Beispiel aus der Europäischen Patentanmeldung mit Titel "Gurtsystem für Identifikationszwecke" bekannt. Diese Europäischen Patentanmeldung wurde unter der Nummer EP 1128153-A1 publiziert.

Es ist Aufgabe der vorliegenden Erfindung bekannte Systeme im Zusammenhang mit der Positionsermittlung einsetzbar zu machen.

Diese vorliegende Aufgabe wird in vorteilhafter Weise erfindungsgemäß durch eine Vorrichtung zur Positionsbestimmung nach Patentanspruch 1 und durch ein Verfahren zur Positionsbestimmung nach Anspruch 6 gelöst.

Andere vorteilhafte Ausführungen der Erfindung ergeben sich aus den weiteren abhängigen Ansprüchen.

Die WO 95/14241 A1 betrifft ein Verfolgungssystem zum Verfolgen zumindest eines Darstellers auf einer Bühne. Nach dem Empfang eines periodischen Signals von einer Kontrolleinheit verstärkt jeder Empfänger in dem Gebiet, in der eine Person durch einen oder mehreren Scheinwerfern verfolgt werden soll das Signal und betreibt eine IR- Quelle, die ein IR-Signal aussendet. Wenn ein IR- Sensor, der im Transponder der verfolgten Person angebracht ist, dieses Signal empfängt, sendet ein Ultraschalltransmitter des Transponders eine Serie von codierten Signalen (Chirps) aus. Der Empfänger sendet die decodierten Chirp- Daten und Informationen betreffend die Dopplerverschiebung der Ultraschallwellen an den Regler. Der Regler verwendet die Daten der Empfänger, um die Position und die Geschwindigkeit des Transponders zu ermitteln. Diese Daten und Zeit, die benötigt wird, um den Scheinwerfer oder die Scheinwerfer für die Verfolgung zu bewegen, werden zum Berechnen einer Vorhersage der Position des Transponders und der Schwenkung der Scheinwerfer auf die vorhergesagte Position des Transponders verwendet.

US 6,141,293 betrifft ein Positionsbestimmungssystem und Verfolgungssystem, wobei ein RF-Triggersignal verwendet wird, um an einem am Objekt befestigten Transponder ein Ultraschallsignal auszulösen, und wobei die Position des Transponders anhand der Laufzeiten der Ultraschallsignalen bestimmt wird.

US 6,317,386 B1 offenbart ein ähnliches System.

### Beschreibung der Figuren

Die Erfindung wird nachfolgend beispielsweise an Hand von Zeichnungen näher erläutert. Es zeigt:
- **Fig. 1**: eine schematische Darstellung einer ersten Vorrichtung zur Positions-bestimmung mit einem Überwachungssystem, einer Auswertungsein-heit, einem Transponder und den entsprechenden Signalverbindungen;
- **Fig. 2**: eine schematische Darstellung einer zweiten Vorrichtung zur Positions-bestimmung mit einem Überwachungssystem, einer Auswertungsein-heit, einem Transponder und den entsprechenden Signalverbindungen;
- **Fig. 3**: ein schematisches Flussdiagramm eines ersten erfindungsgemässen Verfahrens;
- **Fig. 4**: ein schematisches Flussdiagramm eines zweiten erfindungsgemässen Verfahrens;
- **Fig. 5**: eine schematische Darstellung eines überwachbaren Bereichs, der in zwei Zonen aufgeteilt ist, mit einer Person, die einen Transponder trägt (nicht sichtbar).

### Beschreibung der Erfindung

Im Folgenden wird die Erfindung anhand mehrerer Zeichnungen näher erläutert.

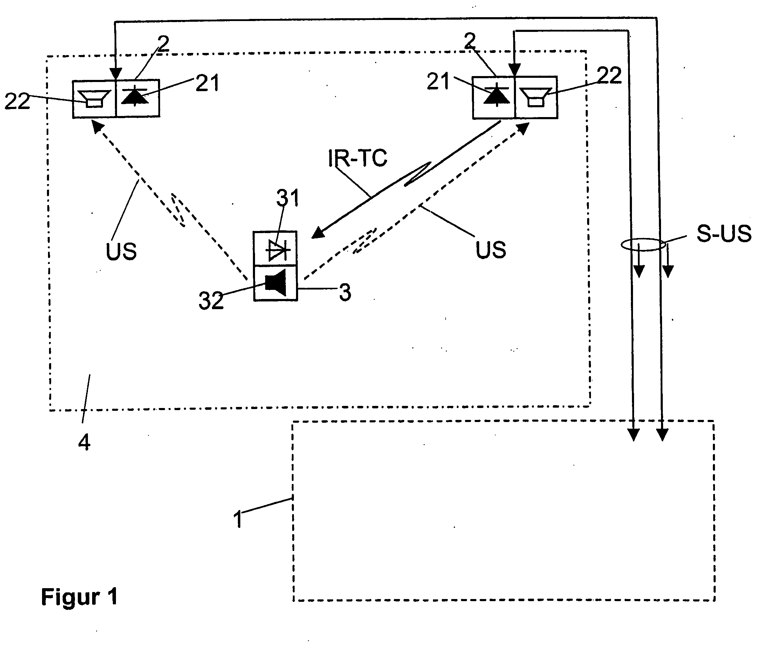

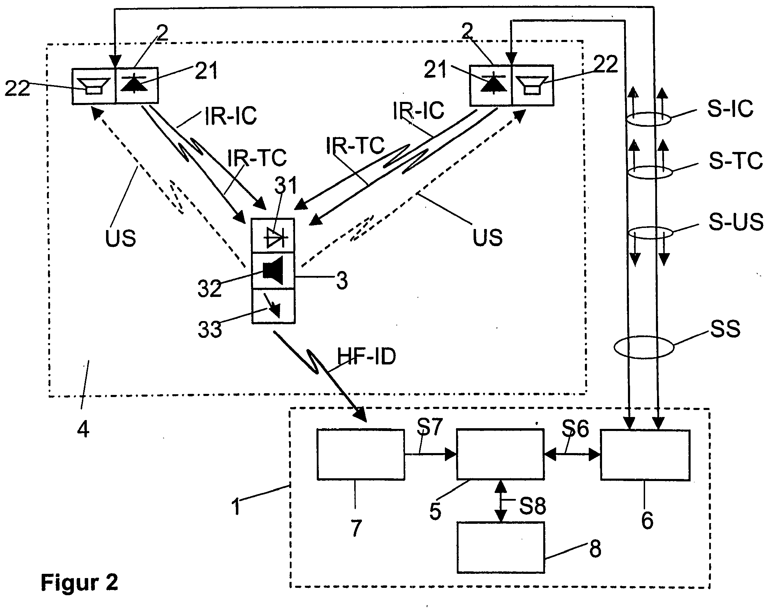

Fig. 1 zeigt schematisch eine erste Vorrichtung nach der Erfindung zur Positionsbestimmung eines sich bewegenden Objekts. Dabei befindet sich das Objekt, welches ein Mensch, ein Fahrzeug oder ein anderes mobiles Gerät sein kann, in einem überwachbaren Bereich 4. Zur Feststellung der räumlichen Position des Objekts ist dieses mit einem Transponder 3 ausgerüstet, welcher einen Infrarot-Empfänger 31 und einen Ultraschall-Sender 32 umfasst. Es ist offensichtlich, dass der Transponder 3 noch weitere Mittel zur Stromversorgung sowie zur Koordinierung der eben genannten Komponenten 31 und 32 umfasst (in Fig. 2 nicht gezeigt). Die Vorrichtung nach der Erfindung umfasst weiter ein stationäres Überwachungssystem mit mindestens zwei Sensoreinheiten 2 und einer Auswertungseinheit 1. Dabei umfassen die Sensoreinheiten 2 je einen Infrarot-Sender 21 und einen Ultraschall-Empfänger 22. Das Überwachungssystem ist dabei so ausgelegt, dass die folgenden Signalverbindungen möglich sind.

Ein Startsignal S-TC löst bei einer der beiden Sensoreinheiten 2 oder bei beiden Sensoreinheiten 2 das Aussenden eines Infrarot-Triggersignals IR-TC aus, welches vom Infrarot-Empfänger 31 des Transponders 3 empfangen werden kann. Als Reaktion auf das empfangene Infrarot-Triggersignal IR-TC sendet der Ultraschall-Sender 32 des Transponders 3 unmittelbar ein Ultraschall-Signal US zurück, welches von den Ultraschall-Empfängern 22 der beiden Sensoreinheiten empfangen werden kann. Unmittelbar nach dem Empfang des Ultraschall-Signals US sendet jede der Sensoreinheiten 2 ein Stopsignal S-US an die Auswertungseinheit 1. Die Auswertungseinheit 1 kann nun auf Grund der Zeitdifferenzen zwischen dem Startsignal S-TC und den entsprechenden Stopsignalen S-US die Position des Transponders 3, und damit die Position des Objekts, bestimmen. Dies kann vorzugsweise mittels eines Triangulationsverfahrens geschehen. Mit anderen Worten, es werden mit der Vorrichtung nach der Erfindung die Laufzeiten des Ultraschall-Signals US zwischen dem Transponder 3 und den Sensoreinheiten 2 ermittelt, wobei die Laufzeiten weiter zu einer Positionsangabe des Objekts verarbeitet werden können. Dabei wird der beträchtliche Unterschied der Fortpflanzungsgeschwindigkeiten der elektro-magnetischen Signale IR-TC und S-US einerseits, und des Ultraschall-Signals US andererseits, ausgenützt, wobei eine genaue Bestimmung der Laufzeiten der Ultraschall-Signale US mit einfachen Mitteln möglich wird.

Fig. 2 zeigt schematisch eine weitere Vorrichtung nach der Erfindung zur Positionsbestimmung eines sich bewegenden Objekts. Zur Feststellung der räumlichen Position des Objekts ist dieses mit einem Transponder 3 ausgerüstet, welcher einen Infrarot-Empfänger 31 und einen Ultraschall-Sender 32 umfasst. Optional kann der Transponder auch einen Radio-Sender 33 umfassen. Es ist offensichtlich, dass der Transponder 3 noch weitere Mittel zur Stromversorgung sowie zur Koordinierung der eben genannten Komponenten 31 und 32 umfassen kann (in Fig. 2 nicht gezeigt). Die Vorrichtung nach der Erfindung umfasst weiter ein stationäres Überwachungssystem mit mindestens zwei Sensoreinheiten 2 und einer Auswertungseinheit 1. Dabei umfassen die Sensoreinheiten 2 je einen Infrarot-Sender 21 und einen Ultraschall-Empfänger 22. Das Überwachungssystem ist dabei so ausgelegt, dass die folgenden Signalverbindungen möglich sind.

Die Auswertungseinheit 1 sendet an die Sensoreinheiten 2 zeitgleich ein Startsignal S-TC. Dieses ist dabei so gestaltet, dass beim Empfang durch die Sensoreinheiten 2 unmittelbar ein Infrarot-Triggersignal IR-TC vom Infrarot-Sender 21 ausgesendet wird, welches vom Infrarot-Empfänger 31 empfangen werden kann. Als Reaktion auf das empfangene Infrarot-Triggersignal IR-TC sendet der Ultraschall-Sender 32 unmittelbar ein Ultraschall-Signal US aus, welches vom Ultraschall-Empfänger 22 empfangen werden kann. Unmittelbar nach dem Empfang des Ultraschall-Signals US sendet jede der Sensoreinheiten 2 ein Stopsignal S-US an die Auswertungseinheit 1. Die Auswertungseinheit 1 kann nun auf Grund der Zeitdifferenzen zwischen dem zeitgleich gesendeten Startsignal S-TC und den entsprechenden Stopsignalen S-US die Position des Transponders 3, und damit die Position des Objekts, bestimmen. Mit anderen Worten, es werden mit der Vorrichtung nach der Erfindung die Laufzeiten des Ultraschall-Signals US zwischen dem Transponder 3 und den Sensoreinheiten 2 ermittelt, wobei die Laufzeiten weiter zu einer Positionsangabe des Objekts verarbeitet werden können. Dabei wird der beträchtliche Unterschied der Fortpflanzungsgeschwindigkeiten der elektro-magnetischen Signale S-TC, IR-TC und S-US einerseits, und des Ultraschall-Signals US andererseits, ausgenützt, wobei eine genaue Bestimmung der Laufzeiten der Ultraschall-Signale US mit einfachen Mitteln möglich wird.

Die Vorrichtung zur Positionsbestimmung nach der Erfindung kann auch mehrere Objekte mit je einem am Objekt befestigten Transponder 3 umfassen. Dadurch werden die Positionen von mehreren sich im überwachbaren Bereich 4 aufhaltenden Objekte ermittelbar. Der Transponder 3 kann auch Teil eines Gurtsystems sein, welches aus der eingangs genannten Patentanmeldung EP1128153-A1 bekannt ist.

Die Auswertungseinheit 1 umfasst mindestens eine Steuereinheit 6, eine Recheneinheit 5, eine Visualisierungseinheit 8 und einen Radio-Empfänger 7. Dabei sind die genannten Komponenten 5 bis 8 auf folgende Weise verbunden: Die Steuereinheit 6 ist über eine Verbindung S6 mit der Recheneinheit 5 verbunden und die Steuereinheit 6 ist weiter verbunden mit den Sensoreinheiten 2 über Verbindungen SS. Die Recheneinheit 5 ist weiter verbunden mit der Visualisierungseinheit 8 über eine Verbindung S8 und mit dem Radio-Empfänger 7 über eine Verbindung S7.

Die Komponenten 5 bis 8 führen dabei in dem gezeigten Beispiel die folgenden Funktionen aus: Die Recheneinheit 5 übernimmt als übergeordnete Einheit das Management, die Steuerung, die Datenerfassung, die Positionsberechnung und schliesslich die Verwaltung der Positionen aller sich bewegenden Objekte, welche sich im überwachbaren Bereich 4 aufhalten. Die Steuereinheit 6 verarbeitet Steuerbefehle der Recheneinheit 5 und veranlasst als Reaktion die Aussendung des Startsignals S-TC, oder zum Beispiel die Aussendung eines Suchsignals S-IC, welches der Identifizierung der sich im überwachbaren Bereich 4 aufhaltenden Objekte dient. Als weitere Funktion bestimmt die Steuereinheit 6 die Zeitdifferenzen zwischen dem ausgesendeten Startsignal S-TC und den entsprechenden empfangenen Stopsignalen S-US und wandelt diese Zeitdifferenzen in entsprechende Distanzwerte Dx um. Diese Distanzwerte Dx werden anschliessend an die Recheneinheit 5 zur weiteren Verarbeitung übergeben. Die Visualisierungseinheit 8 stellt die von der Recheneinheit 5 erhaltenen Positionen grafisch dar, zum Beispiel auf einem Display. Dabei können zum Beispiel sowohl die momentanen Positionen als auch die vorhergehenden Positionen mit Bezug auf die Geometrie des überwachbaren Bereichs 4 dargestellt werden.

Der Radio-Empfänger 7 kann Radio-Signale HF-ID, welche zum Beispiel eine Objekt-Identifizierungsnummer IDx umfassen, empfangen und leitet die damit erhaltenen Objekt-Identifizierungsnummern IDx an die Recheneinheit 5 zur weiteren Verarbeitung weiter.

Erfindungsgemäß umfasst der Transponder 3 einen Radio-Sender 33, wobei der Radio-Sender 33 mit dem Radio-Empfänger 7 drahtlos verbindbar ist. Diese Radioverbindung erlaubt die Übermittlung der Objekt-Identifizierungsnummer IDx, die zur Identifizierung eines Objekts welches sich im überwachbaren Bereich 4 befindet, dient.

In einer weiteren Ausführungsform kann die Steuereinheit 6 als Einschub-Modul oder als Einsteckkarte in der Recheneinheit 5 vorhanden sein. Dabei können mehrere Steuereinheiten 6 vorgesehen sein, um dadurch die Anzahl der angeschlossenen Sensoreinheiten 2 erhöhen zu können. Dies dient zur räumlichen Erweiterung des überwachbaren Bereichs 4 und/oder zur Erhöhung der Anzahl von detektierbaren Stopsignalen S-US, was eine Verbesserung der Positionsgenauigkeit bewirken kann.

In einer weiteren Ausführungsform können die Verbindungen SS zwischen den Sensoreinheiten 2 und der Auswertungseinheit 1, beziehungsweise der Steuereinheit 6, drahtlose Verbindungen oder drahtgebundene Verbindungen sein.

Als Beispiel für drahtgebundene Verbindungen kommen metallische Leiter, die auch zusätzlich zur Stromversorgung der Sensoreinheiten 2 dienen können, oder optische Glasfasern in Betracht. Als Beispiel für drahtlose Verbindungen kommen Radioverbindungen oder optische Richtstrahlverbindungen in Betracht. Die dazu notwendigen Mittel zur Übertragung sind in Fig. 2 nicht gezeigt, da diese Mittel nicht erfindungsrelevant sind. Derartige Mittel können zum Beispiel aus Standardkomponenten aufgebaut oder zusammengestellt werden.

In einer vorzugsweisen Ausführungsform sind die Sensoreinheiten 2 so ausgelegt, dass sie einen Infrarot-Burst hoher Energie als Infrarot-Triggersignal IR-TC abstrahlen, um sicher zu stellen, dass alle sich im überwachbaren Bereich befindlichen Transponder 3 angesprochen werden können.

Die erfindungsgemässe Vorrichtung kann so ausgelegt werden, dass sie in einem geschlossenen Raum oder Gebäude verwendbar ist. Es kann mit der erfindungsgemässe Vorrichtung auch die unmittelbare Umgebung eines Gebäudes überwacht werden, wobei die Sendeleistungen bzw. Empfangsempfindlichkeiten entsprechend gewählt werden müssen.

Vorzugsweise wird eine Person, deren Position gemäss Erfindung erfasst werden soll, mit einem SIMLAS® Gurtsystem ausgerüstet, das einen Körpergurt und einen Helmgurt aufweist, wie im einleitenden Teil dieser Beschreibung erläutert. Das SIMLAS® Gurtsystem kann entsprechend hard- oder softwaremässig angepasst werden, um eine reibungslose Integration in das erfindungsgemässe System zu ermöglichen.

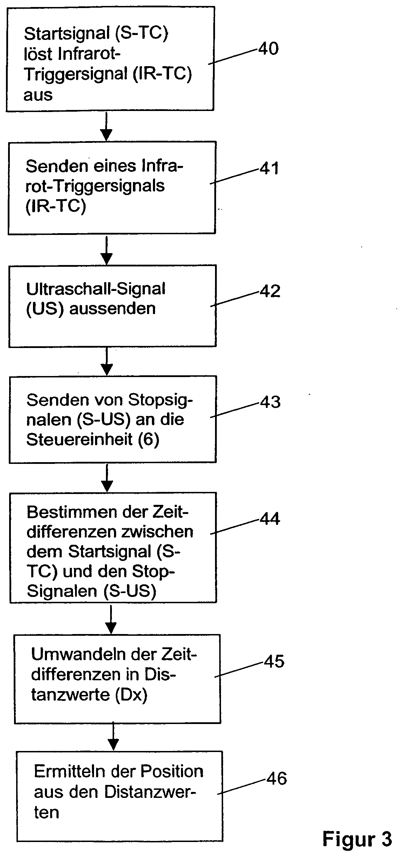

Im Folgenden wird ein erstes Verfahren zur Positionsbestimmung eines sich bewegenden Objekts in einem überwachbaren Bereich 4 nach der Erfindung beschrieben. Dieses Verfahren ist in Fig. 3 schematisch dargestellt. Das Verfahren zur Positionsbestimmung wird in einem System ausgeführt, das einen an dem sich bewegenden Objekt befestigbaren Transponder 3 und ein Überwachungssystem mit mindestens zwei Sensoreinheiten 2 umfasst. Es werden die folgenden Verfahrensschritte ausgeführt:
- Schritte 40, 41: Aussenden eines Infrarot-Triggersignal (IR-TC) durch mindestens eine der beiden Sensoreinheiten (2) als Reaktion auf ein Startsignal (S-TC);
- Schritt 42: Senden eines Ultraschall-Signal (US) mittels eines Ultraschall-Senders (32), der Teil des Transponders (3) ist, als Reaktion auf das Infrarot-Triggersignal (IR-TC);
- Schritt 43: Senden eines Stopsignals (S-US) durch jede der beiden Sensoreinheiten (2) an eine Steuereinheit (6) als Reaktion auf das empfangene Ultraschall-Signal (US);
- Schritt 44: Bestimmen der Zeitdifferenzen zwischen dem Startsignal (S-TC) und den Stop-Signalen (S-US) durch die Steuereinheit (6);
- Schritt 45: Umwandeln der Zeitdifferenzen in Distanzwerte (Dx) zwischen dem Transponder (3) und den Sensoreinheiten (2), wobei die Distanzwerte (Dx) den Laufzeiten des Ultraschall-Signals (US) entsprechen; und
- Schritt 46: Ermitteln der Position des sich bewegenden Objekts.

Im Folgenden wird ein weiteres Verfahren zur Positionsbestimmung eines sich bewegenden Objekts in einem überwachbaren Bereich 4 nach der Erfindung beschrieben. Dabei entnimmt die Recheneinheit 5 einer Liste 10 die ausgewählte Objekt-Identifizierungsnummer IDx und veranlasst die Steuereinheit 6, das Startsignal S-TC zeitgleich an die Sensoreinheiten 2 zu senden. Das Startsignal S-TC kann dabei zum Beispiel einen Triggercode und die ausgewählte Objekt-Identifizierungsnummer IDx umfassen. Die Liste 10 umfasst dabei alle Objekt-Identifizierungsnummern IDx von Objekten, die sich momentan im überwachbaren Bereich 4 aufhalten. Als Reaktion auf das Startsignal S-TC senden die Sensoreinheiten 2 das Infrarot-Triggersignal IR-TC aus, welches den im entsprechenden Startsignal S-TC enthaltenen Triggercode und die ausgewählte Objekt-Identifizierungsnummer IDx umfasst. Dabei kann das Infrarot-Triggersignal IR-TC von mehreren Infrarot-Empfängern 31 und damit von mehreren Transpondern 3 empfangen werden. Jeder der angesprochenen Transponder 3 überprüft nun die empfangene Objekt-Identifizierungsnummer IDx mit der eigenen Objekt-Identifizierungsnummer. Bei Übereinstimmung der Objekt-Identifizierungsnummern IDx wird von dem betreffenden Transponder 3 als Reaktion das Ultraschall-Signal US ausgesendet. Bei Nichtübereinstimmung der Objekt-Identifizierungsnummern IDx wird dagegen bei dieser Ausführungsform kein Ultraschall-Signal US ausgesendet. Somit werden Interferenzen zwischen mehreren gleichzeitig ausgesendeten Ultraschall-Signalen US vermieden. Das ausgesendete Ultraschall-Signal US wird nun von den Sensoreinheiten 2 zu verschiedenen Zeitpunkten, entsprechend den verschiedenen Laufzeiten, empfangen und als Reaktion von den Sensoreinheiten 2 unmittelbar als entsprechende Stopsignale S-US an die Auswertungseinheit 1, beziehungsweise an die Steuereinheit 6, gesendet. Die Steuereinheit 6 ermittelt nun die Zeitdifferenzen zwischen dem zeitgleich gesendeten Startsignal S-TC und den zu verschiedenen Zeiten eintreffenden Stopsignalen S-US. Anschliessend werden die ermittelten Zeitdifferenzen in entsprechende Distanzwerte Dx umgewandelt und zur Positionsbestimmung an die Recheneinheit 5 übergeben.

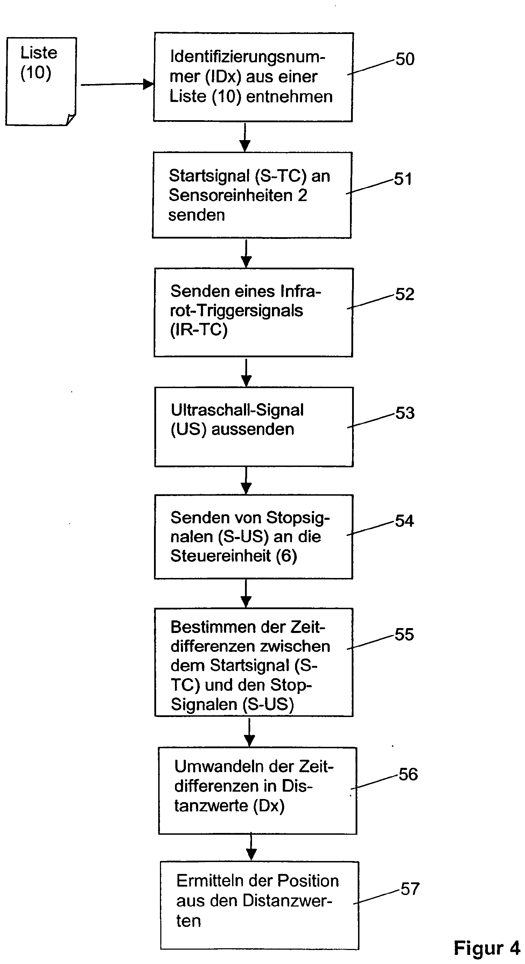

Dieses beispielhafte Verfahren ist in Fig. 4 dargestellt und wird im Folgenden unter Bezugnahme auf Fig. 4 erläutert. In einem ersten Verfahrensschritt 50 wird eine Objekt-Identifizierungsnummer (IDx) aus einer Liste 10 entnommen. Dann wird die Steuereinheit 6 in einem Schritt 51 veranlasst ein Startsignal (S-TC) an die Sensoreinheiten 2 zu senden. Die Sensoreinheiten 2 senden in einem Schritt 52 ein Infrarot-Triggersignal (IR-TC) als Reaktion auf das Startsignal (S-TC) in den zu überwachenden Bereich. In einem weiteren Schritt 53 wird von dem Ultraschall-Sender 32 als Reaktion auf das Infrarot-Triggersignal (IR-TC) ein Ultraschall-Signal (US) ausgesendet. Die Sensoreinheiten 2 senden im Schritt 54 darauf hin je ein Stopsignal (S-US) an die Steuereinheit 6 als Reaktion auf das empfangene Ultraschall-Signal (US). Im Schritt 55 bestimmt die Steuereinheit 6 die Zeitdifferenzen zwischen dem Startsignal (S-TC) und den Stop-Signalen (S-US). Nun werden im Schritt 56 die Zeitdifferenzen in Distanzwerte (Dx) umgewandelt. Dabei handelt es sich um die Distanzwerte (Dx) zwischen dem Transponder (3) und den Sensoreinheiten (2). Die Distanzwerte (Dx) werden aus den Laufzeiten des Ultraschall-Signals US ermittelt. In einem weiteren Schritt 57 wird aus den ermittelten Distanzwerten die Position im überwachten Bereich ermittelt.

In einem weiteren Verfahren nach der Erfindung wird die Liste 10 auf folgende Weise erzeugt: Die Recheneinheit 5 veranlasst mittels Steuerbefehlen die Steuereinheit 6 periodisch das Suchsignal S-IC an die Sensoreinheiten 2 zu senden. Die Sensoreinheiten 2 senden als Reaktion durch den IR-Sender 21 ein Infrarot-Suchsignal IR-IC aus, welches von einem oder mehreren der sich im überwachbaren Bereich 4 aufhaltenden Transponder 3 über den IR-Empfänger 31 empfangen werden kann. Als Reaktion sendet der Transponder 3 durch den Radio-Sender 33 ein Radio-Signal HF-ID aus, welches zum Beispiel die dem Transponder 3 zugehörende Objekt-Identifizierungsnummer IDx umfassen kann. Der Radio-Empfänger 7 empfängt das Radio-Signal HF-ID und leitet anschliessend die empfangene Objekt-Identifizierungsnummer IDx an die Recheneinheit 5 zur Aufbereitung der Liste 10 weiter. Mit anderen Worten, es werden durch die periodisch ausgesendeten Suchsignale S-IC die sich im überwachbaren Bereich 4 aufhaltenden Objekte identifiziert und deren Objekt-Identifizierungsnummern IDx in die Liste 10 eingetragen. Dadurch ist zu jeder Zeit die Anzahl und Identität der Objekte, welche sich im überwachbaren Bereich 4 aufhalten, bekannt. Es handelt sich also in dieser Ausführungsform um eine dynamisch generierte und verwaltete Liste 10. Zur Vermeidung von Interferenzen, welche sich durch eine zeitliche Überlappung von mehreren Radio-Signalen HF-ID ergeben können, kann zum Beispiel ein geeignetes Signalprotokoll zur zeitlichen Staffelung der Radio-Signale HF-ID angewendet werden.

In einem weiteren Verfahren nach der Erfindung werden die von der Steuereinheit 6 ermittelten Distanzwerte Dx von der Recheneinheit 5 in echte, durch direkte Sichtverbindung zwischen Transponder 3 und Sensoreinheiten 2 erhaltene Distanzwerte, und in unechte, durch Reflexionen erhaltene Distanzwerte, unterschieden. Die Unterscheidung kann beispielsweise dadurch erfolgen, dass offensichtlich zu grosse Distanzwerte, welche nicht den räumlichen Dimensionen des überwachbaren Bereichs 4 entsprechen, eliminiert werden. Zur Berechnung der Position werden dabei vorzugsweise nur als echt gekennzeichnete Distanzwerte verwendet.

In einem weiteren Verfahren nach der Erfindung wird die Position in Bezug auf ein Koordinatensystem (zum Beispiel ein XYZ-Koordinatensystem), welches den überwachbaren Bereich 4 umspannt, von der Recheneinheit 5 berechnet. Mittels bekannter mathematischer Triangulationsverfahren kann aus der Kenntnis der Orts-Koordinaten der stationären Sensoreinheiten 2 und den ermittelten echten Distanzwerten Dx eine oder mehrere mögliche Positionen berechnet werden. Dabei wird von mehreren berechneten möglichen Positionen diejenige zur Darstellung ausgewählt, welche den kleinsten räumlichen Abstand zur letzten bekannten Position aufweist.

Das erfindungsgemässe Verfahren, respektive die Auswertungseinheit 1, kann so ausgelegt sein, dass es möglich ist Personen oder Objekte auch zu verfolgen, die sich von einem Bereich in einen anderen Bereich bewegen, zum Beispiel von einem Raum in einen benachbarten Raum. Es kann ein Übergabeprotokoll vorgesehen werden, um einen schnellen, störungsfreien Übergang zu ermöglichen.

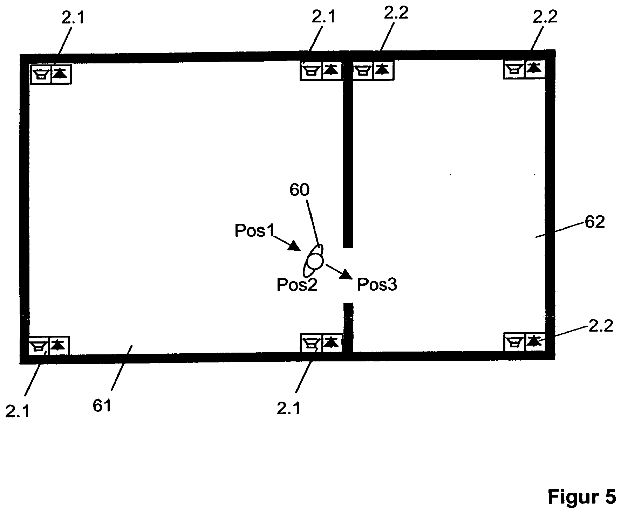

In Fig. 5 ist eine schematische Darstellung eines überwachbaren Bereichs gezeigt, der in zwei Zonen, Raum 61 und Raum 62, aufgeteilt ist. Es befindet sich eine Person 60 in dem Raum 61. Die Person 60 trägt einen Transponder (z.B. Transponder 3), der in Fig. 5 nicht sichtbar ist. Eine derartige Darstellung kann zum Beispiel auf dem Display der Visualisierungseinheit 8 angezeigt werden. Der Raum 61 umfasst vier Sensoreinheiten 2.1 und der Raum 62 umfasst drei Sensoreinheiten 2.2. Die Auswertungseinheit ist vorzugsweise so aufgebaut, das bei der Positionsbestimmung ein "forward-looking" Algorithmus zur Anwendung gebracht werden kann, der aus vergangenen Positionen (z.B. Positionen Pos1 und Pos2) eines sich im Überwachungsbereich bewegenden Objekts 60 eine erwartete Position (z.B. Positionen Pos3) vorausberechnet. Bei dieser Vorausberechnung kann zum Beispiel die Bewegungsrichtung und die Bewegungsgeschwindigkeit des jeweiligen Objekts Berücksichtigung finden.

Dieser "forward-looking" Algorithmus ermöglicht eine nahtlose, schnelle Übergabe beim Übergang vom Raum 61 in den Raum 62. Vorzugsweise kommt ein Übergabeprotokoll zur Anwendung, das zusammen mit dem "forward-looking" Algorithmus für eine schnelle Übergabe sorgt. Dies ist ein wichtiges Merkmal der vorliegenden Erfindung.

Ein Teil der Schritte oder alle Schritte, die in der Auswertungseinheit 1 ablaufen, können mittels geeigneter Software realisiert sein, welche die Hardware der Auswertungseinheit 1 entsprechend steuert.

Die Erfindung eignet sich besonders für das Training und die Simulation von Kampfeinsätzen oder von anderen Einsätzen von Spezialkräften, wie Feuerwehren, Bergungsmannschaften, Sicherheitspersonal, Polizeikräften und dergleichen. Im Training oder bei der Simulation wird damit die jeweilige Situation und jede Bewegung der Spezialkräfte auf der Visualisierungseinheit 8 anzeigbar. Es kann ein Speichermedium vorgesehen werden, um den Ablauf zur späteren Auswertung aufzeichnen zu können.

Eine Vorrichtung gemäss Erfindung kann aber auch in Situationen zum Einsatz kommen, die eine spezielle Überwachung erfordern. Beispiel sind: Flughafengebäude, Banken, Kraftwerke und andere Sicherheitszonen. Bei einem solchen Einsatz, ist die Vorrichtung permanent oder zeitweise im Einsatz und kann zum Beispiel einer Kommandoperson das Überwachen und Instruieren bzw. Dirigieren von Spezialkräften ermöglichen. Zu diesem Zweck müssen die Spezialkräfte mit Transpondern (zum Beispiel in Form eins Helmgurtes) ausgerüstet sein.

Es ist ein Vorteil der Erfindung, dass eine Auflösung im Zentimeterbereich möglich ist.

## Patentansprüche

1. Vorrichtung zur Positionsbestimmung eines sich bewegenden Objekts (60) mit einem Überwachungssystem und mit einem an dem sich bewegenden Objekt (60) befestigten Transponder (3), welcher einen Infrarot-Empfänger (31) und einen Ultraschall-Sender (32) umfasst, wobei das Überwachungssystem eine Auswertungseinheit (1) und mindestens zwei Sensoreinheiten (2, 2.1, 2,2) aufweist, die mit der Auswertungseinheit (1) verbunden sind und einen Infrarot-Sender (21) und einen Ultraschall-Empfänger (22) umfassen, wobei die Auswertungseinheit (1) ein Startsignal (S-TC) an die Sensoreinheiten (2, 2.1, 2.2) sendet, mindestens eine der Sensoreinheiten (2, 2.1, 2,2) ein Infrarot-Triggersignal (IR-TC) aussendet, welches die Aussendung eines Ultraschall-Signals (US) durch den Ultraschall-Sender (32) am Transponder (3) auslöst, das Ultraschall-Signal (US) von den Ultraschall-Empfängern (22) der Sensoreinheiten (2, 2.1, 2.2) empfangen und von diesen je ein entsprechendes Stoppsignal (S-US) an die Auswertungseinheit (1) gegeben wird und durch die Auswertungseinheit (1) mittels Laufzeitermittlung des Ultraschall-Signals (US) zwischen dem Startsignal (S-TC) und den entsprechenden Stoppsignalen (S-US) die Positionsbestimmung des sich bewegenden Objekts (60) ausgeführt wird, wobei das Infrarot-Triggersignal eine Objekt-Identifizierungsnummer (IDx) umfasst, und der Transponder (3) dazu ausgebildet ist, die durch das Infrarot-Triggersignal (IR-TC) empfangene Objekt-Identifizierungsnummer (IDx) mit einer eigenen Objekt-Identifizierungsnummer zu vergleichen, und wobei der Transponder (3) dazu ausgebildet ist, das Ultraschall-Signal (US) nur bei Übereinstimmung der Objekt-Identifizierungsnummer (IDx) aus zu senden, und wobei die Auswertungseinheit (1) mindestens eine Steuereinheit (6), eine Recheneinheit (5), eine Visualisierungseinheit (8) und einen Radio-Empfänger (7) umfasst, wobei die mindestens eine Steuereinheit (6) mit der Recheneinheit (5), die Recheneinheit (5) mit der Visualisierungseinheit (8) und der Radio-Empfänger (7) mit der Recheneinheit (5) verbunden sind, und wobei
der Transponder (3) einen Radio-Sender (33) zur Übermittlung der Objekt-Identifizierungsnummer (IDx) umfasst, wobei der Radio-Sender (33) mit dem Radio-Empfänger (7) drahtlos verbunden ist.

2. Vorrichtung zur Positionsbestimmung nach Anspruch 1, **dadurch gekennzeichnet, dass** die mindestens eine Steuereinheit (6) als mindestens ein Einschub-Modul in der Recheneinheit (5) vorhanden ist.

3. Vorrichtung zur Positionsbestimmung nach Anspruch 1 oder 2, **dadurch gekennzeichnet, dass** Verbindungen (SS) zwischen den Sensoreinheiten (2, 2.1, 2.2) und der Auswertungseinheit (1) drahtlose Verbindungen oder drahtgebundene Verbindungen sind.

4. Vorrichtung zur Positionsbestimmung nach einem der Ansprüche 1 bis 3, **dadurch gekennzeichnet, dass** die Positionsbestimmung des sich bewegenden Objekts (60) in einem überwachbaren Bereich (4, 61, 62) erfolgt, wobei der überwachbare Bereich in zwei Räume (61, 62) aufgeteilt sein kann.

5. Vorrichtung zur Positionsbestimmung nach Anspruch 1 bis 4, **dadurch gekennzeichnet, dass** mehrere sich bewegende Objekte mit je einem an den Objekten befestigten Transponder (3) in dem Überwachungsraum (4) vorgesehen sind.

6. Verfahren zur Positionsbestimmung eines sich bewegenden Objekts (60) mit einem an dem sich bewegenden Objekt befestigten Transponder (3) und einem Überwachungssystem mit mindestens zwei Sensoreinheiten (2, 2.1, 2.2) und einer Auswertungseinheit (1), wobei die Auswertungseinheit (1) mindestens eine Steuereinheit (6), eine Recheneinheit (5), eine Visualisierungseinheit (8) und einen Radio-Empfänger (7) umfasst, wobei die mindestens eine Steuereinheit (6) mit der Recheneinheit (5), die Recheneinheit (5) mit der Visualisierungseinheit (8) und der Radio-Empfänger (7) mit der Recheneinheit (5) verbunden sind, und wobei der Transponder (3) einen Radio-Sender (33) zur Übermittlung einer Objekt-Identifizierungsnummer (IDx) umfasst, wobei der Radio-Sender (33) mit dem Radio-Empfänger (7) drahtlos verbunden ist, wobei das Verfahren die folgenden Verfahrensschritte umfasst:
▪ aussenden eines Infrarot-Triggersignal (IR-TC) mittels mindestens einer der zwei Sensoreinheit (2, 2.1, 2.2) als Reaktion auf ein Startsignal (S-TC) der Auswertungseinheit (1),
▪ senden eines Ultraschall-Signal (US) mittels eines Ultraschall-Senders (32), der Teil des Transponders (3) ist, als Reaktion auf das Infrarot-Triggersignal (IR-TC),
▪ senden eines Stoppsignals (S-US) durch jede der mindestens zwei Sensoreinheiten (2, 2.1, 2.2) an eine Steuereinheit (6) der Auswertungseinheit (1) als Reaktion auf das Ultraschall-Signal (US),
▪ bestimmen von Zeitdifferenzen zwischen dem Startsignal (S-TC) und den entsprechenden Stopp-Signalen (S-US) der Sensoreinheiten (2, 2.1, 2.2) mittels der Steuereinheit (6),
▪ umwandeln der Zeitdifferenzen in Distanzwerte (Dx) zwischen dem Transponder (3) und den Sensoreinheiten (2, 2.1, 2.2) entsprechend den Laufzeiten des Ultraschall-Signals (US), und
▪ ermitteln der Position des sich bewegenden Objekts (60); wobei das Infrarot-Triggersignal eine Objekt-Identifizierungsnummer (IDx) umfasst, wobei die Objekt-Identifizierungsnummer (IDx) vorzugsweise einer Liste (10) entnommen wird, und wobei der Transponder (3) die durch das Infrarot-Triggersignal (IR-TC) empfangene Objekt-Identifizierungsnummer (IDx) mit einer eigenen Objekt-Identifizierungsnummer vergleicht, wobei das Ultraschall-Signal (US) nur bei Übereinstimmung der Objekt-Identifizierungsnummer ausgesendet wird.

7. Verfahren zur Positionsbestimmung nach Anspruch 6, **dadurch gekennzeichnet, dass** das Infrarot-Triggersignal (IR-TC) einen Befehlscode zur Aussendung des Ultraschall-Signals (US) umfasst.

8. Verfahren zur Positionsbestimmung nach Anspruch 6 oder 7, **dadurch gekennzeichnet, dass** die Objekt-Identifizierungsnummer (IDx) einer Liste (10) entnommen wird.

9. Verfahren zur Positionsbestimmung nach Anspruch 6 oder 8, **dadurch gekennzeichnet, dass** die Liste (10) durch die folgenden Verfahrensschritte erzeugt wird, wobei
▪ die Steuereinheit (6) Suchsignale (S-IC) an die Sensoreinheiten (2, 2.1, 2.2) aussendet,
▪ ein IR-Sender (21) mindestens einer der mindestens zwei Sensoreinheiten (2, 2.1, 2.2) ein Infrarot-Suchsignal (IR-IC) als Reaktion aussendet,
▪ das Infrarot-Suchsignal (IR-IC) von einem oder mehreren IR-Empfängern (31), die Teil eines oder mehrerer Transponder (3) sind, empfangen wird,
▪ einer oder mehrere Radio-Sender (33), die Teil eines oder mehrerer Transponder (3) sind, als Reaktion ein Radio-Signal (HF-ID) mit der entsprechenden Objekt-Identifizierungsnummern (IDx) an einen Radio-Empfänger (7) sendet,
▪ die empfangenen Objekt-Identifizierungsnummern (IDx) in die Liste (10) eingetragen werden.

10. Verfahren zur Positionsbestimmung nach einem der Ansprüche 6 bis 9, **dadurch gekennzeichnet, dass** die Auswertungseinheit (1) eine Recheneinheit (5) aufweist, wobei die Recheneinheit (5) die Distanzwerte (Dx) in echte Distanzwerte und in unechte Distanzwerte unterschiedet, wobei die echten Distanzwerte durch eine direkte Sichtverbindung zwischen Transponder (3) und Sensoreinheit (2) und die unechten Distanzwerte durch Reflexion erhalten werden, und nur die echten Distanzwerte von der Recheneinheit (5) weiter verarbeitet werden, wobei die Unterscheidung zwischen echten und unechten Distanzwerten (Dx) dadurch erfolgt, dass offensichtlich zu große Distanzwerte (Dx), welche nicht den räumlichen Dimensionen eines überwachbaren Bereichs (4) entsprechen, eliminiert werden.

11. Verfahren zur Positionsbestimmung nach Anspruch 10, **dadurch gekennzeichnet, dass** die Auswertungseinheit (1) eine Visualisierungseinheit (8) aufweist, wobei die erhaltenen echten Distanzwerte (Dx) zur Berechnung der Position in einem Koordinatensystem verwendet werden, wobei aus mehreren erhaltenen Positionen diejenige mit dem kleinsten Abstand zur letzten bekannten Position ausgewählt und an die Visualisierungseinheit (8) zur Darstellung übermittelt wird.

12. Verfahren zur Positionsbestimmung nach einem der Ansprüche 6 bis 11, **dadurch gekennzeichnet, dass** zur Verfolgung des sich von einem überwachbaren Bereich (61) in einen benachbarten überwachbaren Bereich (62) bewegenden Objektes (60) mittels eines "forward-looking" Algorithmus aus einer vergangenen Position eine erwartende Position vorausberechnet werden kann, wobei die Bewegungsrichtung und die Bewegungsgeschwindigkeit des jeweiligen Objektes (60) Berücksichtigung finden kann.

## Claims

1. Device for determining the position of a moving object (60) having a monitoring system and a
transponder (3) attached to the moving object (60), comprising an infrared receiver (31) and an ultrasound transmitter (32), wherein the monitoring system comprises an analysis unit (1) and at least two sensor units (2, 2. 1, 2.2), which are connected to the analysis unit (1) and comprise an infrared transmitter (21) and an ultrasound receiver (22), wherein the analysis unit (1) transmits a start signal (S-TC) to the sensor units (2, 2.1, 2.2), at least one of the sensor units (2, 2.1, 2.2) transmits an infrared trigger signal (IR-TC) which triggers the transmission of an ultrasound signal (US) by the ultrasound transmitter (32) at the transponder (3), the ultrasound signal (US) is received by the ultrasound receivers (22) of the sensor units (2, 2.1, 2.2) and a corresponding stop signal (S-US) is transmitted from each of these to the analysis unit (1) and the position of the moving object (60) is determined by the analysis unit (1) by means of travel time determination of the ultrasound signal (US) between the start signal (S-TC) and the corresponding stop signals (S-US), the infrared trigger signal comprising an object identification number (IDx), and the transponder (3) is designed to compare the object identification number (IDx) received by the infrared trigger signal (IR-TC) with an own object identification number, and wherein the transponder (3) is designed to transmit the ultrasound signal (US) only when the object identification number (IDx) matches, and wherein
the analysis unit (1) comprises at least one control unit (6), a computing unit (5), a visualization unit (8) and a radio receiver (7), wherein the at least one control unit (6) is connected to the computing unit (5), the computing unit (5) is connected to the visualization unit (8) and the radio receiver (7) is connected to the computing unit (5), and wherein
the transponder (3) comprises a radio transmitter (33) for transmitting the object identification number (IDx), wherein the radio transmitter (33) is wirelessly connected to the radio receiver (7).

2. Device for determining the position according to claim 1, **characterized in that** the at least one
control unit (6) is present as at least one plug-in module in the computing unit (5).

3. Device for determining the position according to claim 1 or 2, **characterized in that** connections
(SS) between the sensor units (2, 2.1, 2.2) and the analysis unit (1) are wireless connections or wirebound connections.

4. Device for determining the position according to one of claims 1 to 3, **characterized in that** the
positioning of the moving object (60) is carried out in a monitorable area (4, 61, 62), wherein the monitorable area can be divided into two spaces (61, 62).

5. Device for determining the position according to claims 1 to 4, **characterized in that** a plurality of
moving objects each having a transponder (3) attached to the objects are provided in the monitoring area (4).

6. Method for determining the position of a moving object (60) with a transponder (3) attached to the
moving object and a monitoring system with at least two sensor units (2, 2.1, 2. 2) and an analysis unit (1), wherein the analysis unit (1) comprises at least one control unit (6), a computing unit (5), a visualization unit (8) and a radio receiver (7), wherein the at least one control unit (6) is connected to the computing unit (5), the computing unit (5) is connected to the visualization unit (8) and the radio receiver (7) is connected to the computing unit (5), and wherein the transponder (3) comprises a radio transmitter (33) for transmitting an object identification number (IDx), wherein the radio transmitter (33) is wirelessly connected to the radio receiver (7), where-the method comprises the following method steps:
▪ emission of an infrared trigger signal (IR-TC) by means of at least one of the two sensor units (2, 2.1, 2.2) in response to a start signal (S-TC) of the analysis unit (1),
▪ transmitting an ultrasound signal (US) by means of an ultrasound transmitter (32), which is part of the transponder (3) in response to the infrared trigger signal (IR-TC),
▪ transmitting a stop signal (S-US) by each of at least two sensor units (2, 2.1, 2.2) to a control unit (6) of the analysis unit (1) in response to the ultrasound signal (US),
▪ determining time differences between the start signal (S-TC) and the corresponding stop signals (S-US) of the sensor units (2, 2.1, 2.2) by means of the control unit (6),
▪ convert the time differences into distance values (Dx) between the transponder (3) and the sensor units (2, 2.1, 2.2) according to the travel times of the ultrasound signal (US), and
▪ determine the position of the moving object (60); wherein
the infrared trigger signal comprises an object identification number (IDx), wherein the object identification number (IDx) is preferably taken from a list (10), and wherein the transponder (3) compares the object identification number (IDx) received by the infrared trigger signal (IR-TC) with its own object identification number, wherein the ultrasound signal (US) is transmitted only when the object identification number matches.

7. Method for determining the position according to claim 6, **characterized in that** the infrared trigger
signal (IR-TC) comprises a command code for emitting the ultrasound signal (US).

8. Method for determining the position according to claim 6 or 7, **characterized in that** the object
identification number (IDx) is taken from a list (10).

9. Method for determining the position according to claim 6 or 8, **characterized in that** the list (10) is generated by the following method steps, wherein
the control unit (6) emits search signals (S-IC) to the sensor units (2, 2.1, 2.2),
an IR transmitter (21) of at least one of the at least two sensor units (2, 2.1, 2.2) emits an infrared search signal (IR-IC) as a reaction,
the infrared search signal (IR-IC) is received by one or more IR receivers (31) which are part of one or more transponders (3),
one or more radio transmitters (33), which are part of one or more transponders (3), send a radio signal (HF-ID) with the corresponding object identification numbers (IDx) to a radio receiver (7) as a reaction,
the object identification numbers (IDx) received are entered in the list (10).

10. Method for determining the position according to one of the claims 6 to 9, **characterized in that**
the analysis unit (1) has a computing unit (5), wherein the computing unit (5) differentiates the distance values (Dx) into real distance values and unreal distance values, the real distance values being obtained by a direct visual connection between transponder (3) and sensor unit (2) and the unreal distance values being obtained by reflection, and only the real distance values are further processed by the computing unit (5), the distinction between real and unreal distance values (Dx) being made by eliminating distance values (Dx) which are obviously too large and which do not correspond to the spatial dimensions of a monitorable area (4).

11. Method for determining the position according to claim 10, **characterized in that** the analysis unit
(1) has a visualization unit (8), wherein the obtained true distance values (Dx) are used to calculate the position in a coordinate system, wherein from several obtained positions the one with the smallest distance to the last known position is selected and transmitted to the visualization unit (8) for display.

12. Method for determining the position according to one of claims 6 to 11, **characterized in that**, in
order to track the object (60) moving from a monitorable area (61) into an adjacent monitorable area (62), an expected position can be precalculated from a past position by means of a "forward-looking" algorithm, the direction of movement and the speed of movement of the respective object (60) being able to be taken into account.

## Revendications

1. Dispositif de localisation d'un objet en mouvement (60), comprenant un système de surveillance et un transpondeur (3) fixé à l'objet en mouvement (60) et comprenant un récepteur infrarouge (31) et un émetteur d'ultrasons (32), dans lequel le système de surveillance présente une unité d'évaluation (1) et au moins deux unités de capteur (2, 2.1, 2,2) qui sont reliées à l'unité d'évaluation (1) et comprennent un émetteur infrarouge (21) et un récepteur d'ultrasons (22), dans lequel l'unité d'évaluation (1) envoie un signal de démarrage (S-TC) aux unités de capteur (2, 2.1, 2.2), au moins l'une des unités de capteur (2, 2.1, 2,2) émet un signal de déclenchement infrarouge (IR-TC) qui déclenche l'émission d'un signal ultrasonore (US) par l'émetteur d'ultrasons (32) au niveau du transpondeur (3), le signal ultrasonore (US) est reçu par les récepteurs d'ultrasons (22) des unités de capteur (2, 2.1, 2.2) et celles-ci transmettent respectivement un signal d'arrêt correspondant (S-US) à l'unité d'évaluation (1), et la localisation de l'objet en mouvement (60) est effectuée par l'unité d'évaluation (1) au moyen d'une détermination de temps de propagation du signal ultrasonore (US) entre le signal de démarrage (S-TC) et les signaux d'arrêt correspondants (S-US), dans lequel le signal de déclenchement infrarouge comprend un numéro d'identification d'objet (IDx), et le transpondeur (3) est réalisé pour comparer le numéro d'identification d'objet (IDx) reçu par le signal de déclenchement infrarouge (IR-TC) à son propre numéro d'identification d'objet, et dans lequel le transpondeur (3) est réalisé pour émettre le signal ultrasonore (US) uniquement en cas de concordance avec le numéro d'identification d'objet (IDx), et dans lequel
l'unité d'évaluation (1) comprend au moins une unité de commande (6), une unité de calcul (5), une unité de visualisation (8) et un récepteur radio (7), dans lequel ladite au moins une unité de commande (6) est reliée à l'unité de calcul (5), l'unité de calcul (5) est reliée à l'unité de visualisation (8) et le récepteur radio (7) est relié à l'unité de calcul (5), et dans lequel
le transpondeur (3) comprend un émetteur radio (33) pour transmettre le numéro d'identification d'objet (IDx), l'émetteur radio (33) étant relié sans fil au récepteur radio (7).

2. Dispositif de localisation selon la revendication 1, **caractérisé en ce que** ladite au moins une unité de commande (6) existe sous la forme d'au moins un module enfichable dans l'unité de calcul (5).

3. Dispositif de localisation selon la revendication 1 ou 2, **caractérisé en ce que** les connexions (SS) entre les unités de capteur (2, 2.1, 2.2) et l'unité d'évaluation (1) sont des connexions sans fil ou des connexions filaires.

4. Dispositif de localisation selon l'une quelconque des revendications 1 à 3, **caractérisé en ce que** la localisation de l'objet en mouvement (60) a lieu dans une zone pouvant être surveillée (4, 61, 62), la zone pouvant être surveillée pouvant être répartie sur deux espaces (61, 62).

5. Dispositif de localisation selon la revendication 1 à 4, **caractérisé en ce que** plusieurs objets en mouvement avec respectivement un transpondeur (3) fixé aux objets peuvent être prévus dans l'espace de surveillance (4).

6. Procédé de localisation d'un objet en mouvement (60) avec un transpondeur (3) fixé à l'objet en mouvement et un système de surveillance avec au moins deux unités de capteur (2, 2.1, 2.2) et une unité d'évaluation (1), dans lequel l'unité d'évaluation (1) comprend au moins une unité de commande (6), une unité de calcul (5), une unité de visualisation (8) et un récepteur radio (7), dans lequel ladite au moins une unité de commande (6) est reliée à l'unité de calcul (5), l'unité de calcul (5) est reliée à l'unité de visualisation (8) et le récepteur radio (7) est relié à l'unité de calcul (5), et dans lequel le transpondeur (3) comprend un émetteur radio (33) pour transmettre un numéro d'identification d'objet (IDx), l'émetteur radio (33) étant relié sans fil au récepteur radio (7),
le procédé comprenant les étapes de procédé suivantes consistant à :
• émettre un signal de déclenchement infrarouge (IR-TC) au moyen d'au moins l'une des deux unités d'émission (2, 2.1, 2.2) en réponse à un signal de démarrage (S-TC) de l'unité d'évaluation (1),
• envoyer un signal ultrasonore (US) au moyen d'un émetteur d'ultrasons (32) faisant partie du transpondeur (3) en réponse au signal de déclenchement infrarouge (IR-TC),
• envoyer un signal d'arrêt (S-US) par chacune des au moins deux unités de capteur (2, 2.1, 2.2) à une unité de commande (6) de l'unité d'évaluation (1) en réponse au signal ultrasonore (US),
• déterminer les différences de temps entre le signal de démarrage (S-TC) et les signaux d'arrêt correspondants (S-US) des unités de capteur (2, 2.1, 2.2) au moyen de l'unité de commande (6),
• convertir les différences de temps en valeurs de distance (Dx) entre le transpondeur (3) et les unités de capteur (2, 2.1, 2.2) selon les temps de propagation du signal ultrasonore (US), et
• déterminer la position de l'objet en mouvement (60) ; dans lequel
le signal de déclenchement infrarouge comprend un numéro d'identification d'objet (IDx), le numéro d'identification d'objet (IDx) étant de préférence extrait d'une liste (10), et le transpondeur (3) comparant le numéro d'identification d'objet (IDx) reçu par le signal de déclenchement infrarouge (IR-TC) à son propre numéro d'identification d'objet, le signal ultrasonore (US) n'étant émis qu'en cas de concordance avec le numéro d'identification d'objet.

7. Procédé de localisation selon la revendication 6, **caractérisé en ce que** le signal de déclenchement infrarouge (IR-TC) comprend un code d'instruction pour émettre le signal ultrasonore (US).

8. Procédé de localisation selon la revendication 6 ou 7, **caractérisé en ce que** le numéro d'identification d'objet (IDx) est extrait d'une liste (10).

9. Procédé de localisation selon la revendication 6 ou 8, **caractérisé en ce que** la liste (10) est générée par les étapes de procédé suivantes dans lesquelles
• l'unité de commande (6) émet des signaux de recherche (S-IC) aux unités de capteur (2, 2.1, 2.2),
• un émetteur IR (21) d'au moins l'une des au moins deux unités de capteur (2, 2.1, 2.2) émet en réponse un signal de recherche infrarouge (IR-IC),
• le signal de recherche infrarouge (IR-IC) est reçu par un ou plusieurs récepteurs IR (31) faisant partie d'un ou de plusieurs transpondeurs (3),
• un ou plusieurs émetteurs radio (33) faisant partie d'un ou de plusieurs transpondeurs (3) envoient en réponse un signal radio (HF-ID) avec le numéro d'identification d'objet correspondant (IDx) à un récepteur radio (7),
• les numéros d'identification d'objet (IDx) reçus sont inscrits sur la liste (10).

10. Procédé de localisation selon l'une quelconque des revendications 6 à 9, **caractérisé en ce que** l'unité d'évaluation (1) présente une unité de calcul (5), dans lequel l'unité de calcul (5) différencie les valeurs de distance (Dx) en valeurs de distance réelles et en valeurs de distance non réelles, les valeurs de distance réelles étant obtenues par un contact visuel direct entre le transpondeur (3) et l'unité de capteur (2) et les valeurs de distance non réelles étant obtenues par réflexion, et seules les valeurs de distance réelles étant traitées ultérieurement par l'unité de calcul (5), dans lequel la distinction entre les valeurs de distance réelles et non réelles (Dx) est effectuée en éliminant des valeurs de distance (Dx) manifestement trop élevées qui ne correspondent pas aux dimensions spatiales d'une zone pouvant être surveillée (4) .

11. Procédé de localisation selon la revendication 10, **caractérisé en ce que** l'unité d'évaluation (1) présente une unité de visualisation (8), dans lequel les valeurs de distance réelles obtenues (Dx) sont utilisées pour calculer la position dans un système de coordonnées, dans lequel, à partir de plusieurs positions obtenues, celle ayant la plus petite distance par rapport à la dernière position connue est sélectionnée et transmise à l'unité de visualisation (8) pour être représentée.

12. Procédé de localisation selon l'une quelconque des revendications 6 à 11, **caractérisé en ce que** pour la poursuite de l'objet (60) qui se déplace d'une zone pouvant être surveillée (61) vers une zone pouvant être surveillée voisine (62), on peut à l'aide d'un algorithme par anticipation (« forward-looking ») calculer à l'avance une position attendue à partir d'une position antérieure, la direction de déplacement et la vitesse de déplacement de l'objet respectif (60) pouvant être prises en considération.
